# EUROPEAN PATENT SPECIFICATION

(11) **EP 4 119 454 B1**
(45) Date of publication and mention of the grant of the patent: **01.04.2026**
(21) Application number: 22184488.9
(22) Date of filing: 12.07.2022
(51) Int. Cl.: B65B 69/00, B65B 57/04, B26F 3/08, B26D 7/06, B26D 5/00, B26D 1/04, B65G 59/04

(54) **EQUIPMENT FOR THE SEPARATION OF BOXES OF MANUFACTURED ARTICLES**
VORRICHTUNG ZUM SEPARIEREN VON SCHACHTELN VON FABRIKWAREN
DISPOSITIF POUR SEPARER DE BOITES DES ARTICLES MANUFACTURÉS

(30) Priority: 14.07.2021 IT 202100018551
(43) Date of publication of application: 18.01.2023
(73) Proprietor: LK Lab S.r.L., 41042 Fiorano Modenese (MO) (IT)
(72) Inventor: IACARUSO, Luca, 41042 Fiorano Modenese (MO) (IT)
(74) Representative: Zoli, Filippo

(56) References cited:
- EP-B1- 1 340 682
- CN-A- 111 846 489
- JP-A- 2005 046 120
- KR-U- 20130 000 964
- US-A- 4 988 264
- US-A1- 2012 255 264

## Description

### Technical Field

The present invention relates to a piece of equipment for the separation of boxes of manufactured articles.

### Background Art

**In** order to facilitate movement and storage, it is well known in a variety of industrial fields, such as the ceramics sector, to arrange a plurality of manufactured articles inside an individual box and then group a plurality of boxes together by mutually solidarizing them to form a group of boxes, also known as a "bundle".

Specifically, boxes are grouped by gluing them together using adhesive means, usually applied in discrete areas, and securing them by one or more straps wrapped in a ring around the boxes.

**In** other words, boxes are placed on top of each other, interposing adhesive means between them, and the group of boxes thus formed is then wrapped by means of one or more straps.

As it happens more and more frequently that the orders to be prepared involve both groups of boxes and individual boxes, it becomes apparent that there is a need to then break down the groups of boxes thus formed so that the individual boxes can be handled independently of each other.

To date, this operation is carried out by an operator, who then manually separates the individual boxes by removing the ties between them, i.e., removing both adhesive means and straps.

It seems clear, however, that this operation is particularly inconvenient both in terms of cost, as it requires the presence of an operator in charge of this activity, and in terms of production output, as it still requires non-negligible technical time to be carried out.

US 2012/255264 A1, EP 1 340 682 B1, CN 111 846 489 A disclose equipment for the separation of boxes of manufactured articles having cutting means of the straps which bound together the boxes.

US 4 988 264 A and KR 2013 0000964 U disclose equipment having movement means for separating the boxes of a group from each other.

### Description of the Invention

The main aim of the present invention is to devise a piece of equipment for the separation of boxes of manufactured articles to reduce the time and cost of performing this operation compared with the state of the art.

Within this aim, one object of the present invention is to devise a piece of equipment which allows effectively separating boxes of manufactured articles regardless of their overall dimensions and weight.

Another object of the present invention is to devise a piece of equipment for the separation of boxes of manufactured articles which can overcome the mentioned drawbacks of the prior art within the framework of a simple, rational, easy and effective solution that is easy to use and inexpensive.

The aforementioned objects are achieved by this piece of equipment for the separation of boxes of manufactured articles according to claim 1.

### Brief Description of the Drawings

Other characteristics and advantages of the present invention will become more apparent from the description of a preferred, but not exclusive, embodiment of a piece of equipment for the separation of boxes of manufactured articles, illustrated by way of an indicative, yet non-limiting example, in the accompanying tables of drawings in which:

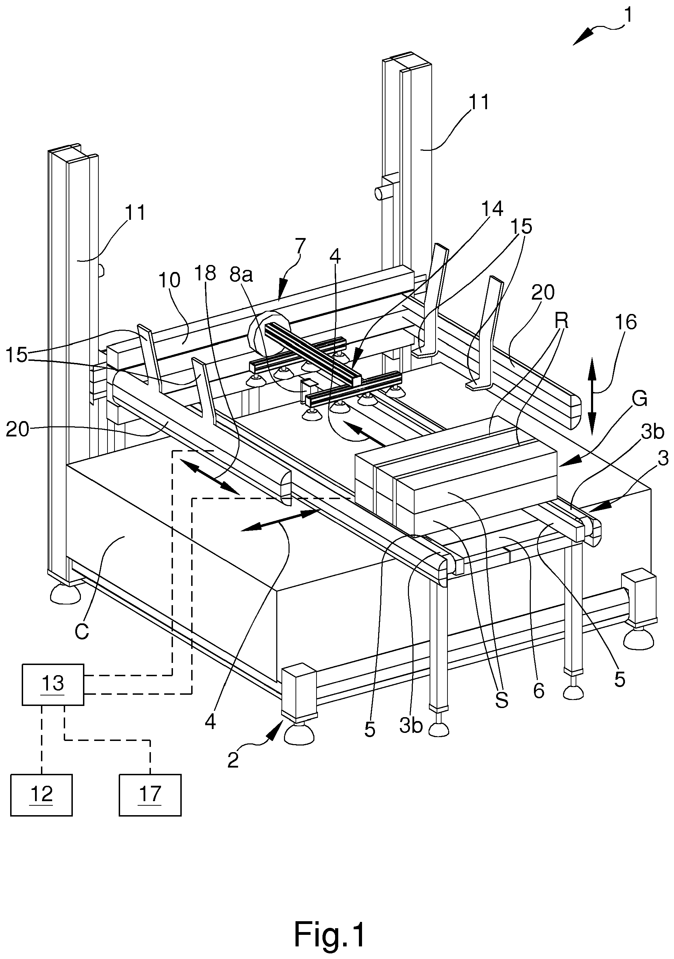

Figure 1 is an axonometric view of a piece of equipment according to the invention;

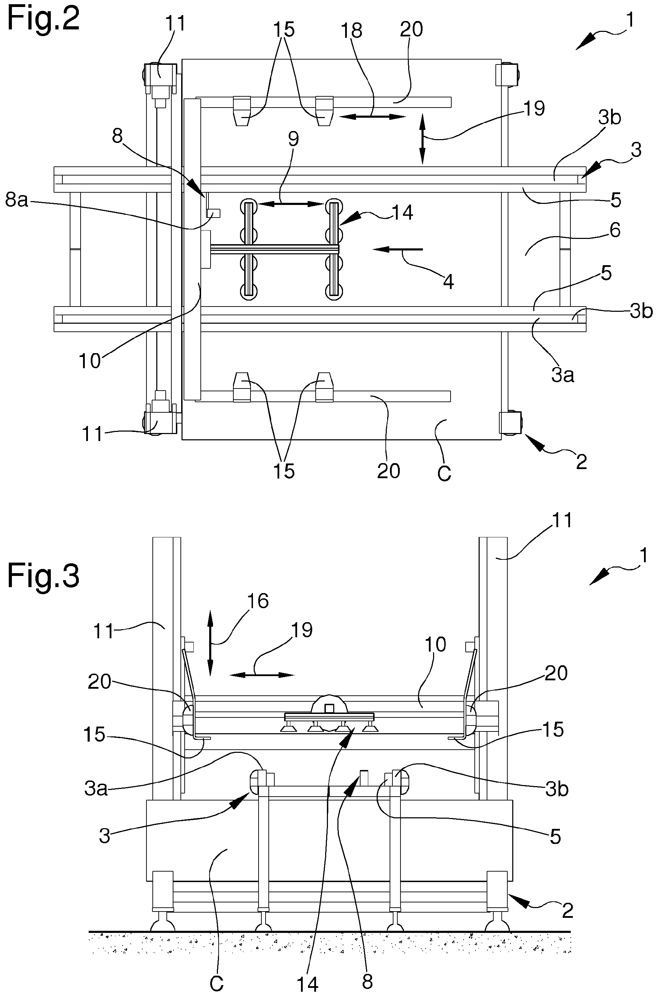

Figure 2 is a plan view from the top of the equipment in Figure 1;
Figure 3 is a front elevation view of the equipment in Figure 1.

### Embodiments of the Invention

With particular reference to these figures, reference numeral 1 globally indicates a piece of equipment for the separation of boxes of manufactured articles, where each one of such boxes comprises a plurality of manufactured articles and where the boxes are bound together solidly to form a group of boxes.

According to the invention, the equipment 1 comprises a basic frame 2 which can be positioned to rest on a surface and movement means 3 along a direction of forward movement 4 of at least one group G of boxes S, each containing a plurality of manufactured articles, such as e.g. of the tile type or the like.

In more detail, the movement means 3 define a holding plane 3a of the group G of boxes S. In the preferred embodiment shown in the figures, the movement means 3 comprise at least one pair of belts 3b spaced apart from each other and movable by motor means (not visible in detail in the figures) along the direction of forward movement 4, and the basic frame 2 comprises at least one pair of guiding elements 5, each of which supporting a relevant belt 3b, spaced apart from each other to define a free volume 6 positioned between them.

According to the invention, the equipment 1 comprises separation means 7 for the mechanical separation of the boxes S of the group G from each other.

Specifically, the boxes S of the group G are arranged on top of each other and are bound to each other by adhesive means, such as of the hot glue type, positioned between them and by means of at least one strap R closed in a ring around them.

According to the invention, the separation means 7 comprise at least cutting means 8 of the strap R.

Preferably, the cutting means 8 are arranged inferiorly to the holding plane 3a defined by the movement means 3.

More particularly, the cutting means 8 comprise at least one cutting element 8a associated with the basic frame 2 and movable by shifting along a direction of cutting 9 substantially parallel to the direction of forward movement 4. The cutting element 8a is thus adapted to intercept the downward-facing portion of the strap R, the latter being wrapped around the group G transversely with respect to the direction of forward movement 4. The displacement of the cutting element 8a along the direction of forward movement 4 is particularly advantageous in cases of more than one strap R wrapped around the group G being provided.

Advantageously, the cutting element 8a is associated with at least one of the guiding elements 5 in a sliding manner and is arranged inside the free volume 6 defined by them.

Appropriately, the cutting element 8a is movable between a position of work, wherein it interferes with the strap R, and a home position, wherein it is arranged lower than the position of work. In other words, in the position of work the cutting element 8a is arranged at the point where the holding plane 3a is located, so that it intercepts the strap R, and in the position of work it is arranged at a lower level, so as to prevent, once the strap R is severed, the cutting element 8a from interfering with the box S arranged on the holding plane 3a and damage it.

In more detail, the cutting element 8a is rotatable between the position of work and the home position, although alternative embodiments cannot be ruled out that still allow the height of cutting element 8a to be changed.

Below the movement means 3, at the point where the cutting means 8 are located, a container C associated with the basic frame 2 is provided and intended to collect the strap R removed from the group G as a result of the cutting carried out by the cutting element 8a.

Advantageously, the equipment 1 comprises abutment means 10 of the group G of boxes S associated with the basic frame 2 and arranged along the direction of forward movement 4. The abutment means 10, such as e.g. of the type of an abutment surface or the like, are adapted to define an end-of-stroke position of the group G and to align the boxes S making it up to each other.

Appropriately, the abutment means 10 are movable between a position of work, wherein they are adapted to interact with the group G of boxes which is movable along the direction of forward movement 4, and a home position, wherein they are moved with respect to the position of work so as to allow the transit of the boxes S along the direction of forward movement 4 as a result of their mutual separation.

More particularly, the abutment means 10 are raised to the home position from the position of work.

In fact, the belts 3b continue beyond the abutment means 10 along the direction of forward movement 4 so as to move the boxes S towards a user point.

In the preferred embodiment shown in the figures, the abutment means 10 are of the type of a barrier associated in a sliding manner with a pair of crossbars 11 arranged alongside the guiding elements 5, externally thereto and extending vertically. The barrier 10 then moves in a vertical direction between the position of work and the home position with respect to the holding plane 3a. Advantageously, the equipment 1 comprises sensor means 12 adapted to detect the interaction between the group G of boxes S and the abutment means 10.

For example, the sensor means 12 are of the type of an optical sensor. Preferably, the equipment 1 comprises one electronic control unit 13, provided with a microprocessor, operatively connected to the sensor means 12 and to the movement means 3, wherein such electronic control unit 13 is configured to stop the operation of the movement means 3 as a result of the signal received by said sensor means 12. In other words, at the time when the sensor means 12 detect the interaction between the group G of boxes S and the abutment means 10, they send a signal to the electronic control unit 13, which disables the movement means 3 because the displacement of the group G along the direction of forward movement 4 is prevented by the abutment means 10.

The separation means 7 then comprise gripping means 14 for gripping at least one of the boxes S of the group G.

Specifically, the gripping means 14 are adapted to intervene as a result of the cutting of the strap R.

More particularly, the gripping means 14 are of the type of a group of suction cups connected to a vacuum generation circuit, not shown in the figures.

In the preferred embodiment shown in the figures, the gripping means 14 are arranged above the movement means 3 and are adapted to intercept the box S of the group G placed higher up in order to raise it with respect to those below.

In other words, as a result of the cutting of the strap R, the gripping means 14 are brought into contact with the box S placed higher up and activated so as to raise that box S with respect to the others.

In more detail, the gripping means 14 are locked together by shifting along the vertical direction with the abutment means 10. In the embodiment shown in the figures, the group of suction cups 14 is extended from the barrier 10 to which it is locked by shifting.

As anticipated above, the boxes S of each group G are bound together not only by one or more straps R but also by adhesive means positioned between each pair of superimposed boxes S.

According to the invention, the separation means 7 also comprise at least one detachment element 15 insertable between the boxes S of the group G to separate them from each other.

Preferably, the detachment element 15 is movable along a direction of adjustment 16 so as to vary its height with respect to the holding plane 3a and, therefore, with respect to the group G of boxes S. The direction of adjustment 16 is oriented transversely with respect to the direction of forward movement 4. Thus, the direction of adjustment 16 is oriented substantially vertically and allows the height of the detachment element 15 to be changed with respect to the holding plane 3a so that it can be inserted between two boxes S superimposed onto each other.

In more detail, the equipment 1 comprises detection means 17 of a gap positioned between two superimposed boxes S of the group G, wherein such detection means 17 are operatively connected to the electronic control unit 13. The electronic control unit 13, in turn operatively connected to the detachment element 15, is configured to move the detachment element 15 along the direction of adjustment 16 so as to position it where the gap has been detected. The term "gap" as used here means a vertical distance between the edges of the superimposed boxes S.

In a particular embodiment, the detachment element 15 is locked in the vertical direction, that is, along the direction of adjustment 16, together with the abutment means 10.

According to the invention, the detachment element 15 is also movable by shifting along a direction of detachment 18 substantially parallel to the direction of forward movement 4. The movement along the direction of detachment 18 allows the detachment element 15 to separate two superimposed boxes S from each other by removing the adhesive means interposed between them, particularly in cases where such adhesive means (so-called glue points) have been applied in a plurality of areas of the boxes themselves.

The direction of detachment 18 and the direction of adjustment 16 are arranged transversely to each other. More specifically, the direction of detachment 18 and the direction of adjustment 16 are arranged perpendicularly to each other. Advantageously, the detachment element 15 is of the heating type, so as to allow the adhesive means to soften and thus facilitate the detachment of the boxes S.

Preferably, the detachment element 15 is movable along a gripping direction 19 as it moves close to/away from the group G of boxes S transverse to the direction of detachment 18 and to the direction of adjustment 16. The displacement of the detachment element 15 along the gripping direction 19 allows the detachment element itself to be placed in a home position, where it does not interfere with the group G during its displacement along the direction of forward movement 4, and then to be brought closer to the group G once it has reached the end-of-stroke position and is arranged resting against the abutment means 10 so as to fit it between the boxes S.

In the preferred embodiment shown in the figures, the separation means 7 comprise at least two detachment elements 15 arranged facing each other and from opposite sides with respect to a plane by means of the movement means 3. In other words, the separation means 7 comprise at least two detachment elements 15, preferably two pairs as shown in the figures, arranged from opposite sides with respect to a vertical median plane and intended to contact from opposite sides the boxes S of the group G.

The detachment elements 15 of each pair then move mutually close to/away from each other when moved along the gripping direction 19.

Specifically, the detachment elements 15 arranged on the same side with respect to the aforementioned median plane are locked together with a supporting element 20 which is in turn jointly associated along the direction of adjustment 16 with the abutment means 10.

**In** the embodiment shown in the figures, the equipment 1 thus comprises two supporting elements 20 arranged facing each other, each supporting two detachment elements 15 and movable in the direction of mutual close/away movement along the gripping direction 19.

The operation of the equipment according to the invention is as follows.

The group G consisting of several boxes S superimposed on top of each other and mutually bound by adhesive means interposed between them and one or more straps R is placed on the movement means 3 and displaced along the direction of forward movement 4.

During the forward movement of the group G, the abutment means 10 are brought to the position of work so as to be contacted by the group G.

As a result of the interaction with the abutment means 10, the boxes of the group G are aligned with each other and the electronic control unit 13 stops the operation of the movement means 3.

Next, the cutting element 8a is brought from the home position to the position of work and moved along the direction of cutting 9 so as to interact with the straps R.

Once the straps R have been cut, the cutting element 8a is again brought to the home position in order to avoid subsequent interaction with the box S placed on the holding plane 3a.

At this point, the boxes S of the group G are bound together only by the adhesive means positioned between them.

The gripping means 14 are then operated so as to contact the highest box S and raise it. Specifically, the group of suction cups 14 is placed where the highest box S is located and, due to the vacuum exerted by the circuit for vacuum generation, it raises the box itself.

As a result of this lifting, a gap is generated between the raised box S and the box below, where this gap is identified by the detection means 17.

The electronic control unit 13 accordingly controls the displacement of the detachment elements 15 by moving them along the direction of adjustment 16 so as to place them at the same height as the detected gap.

Next, the detachment elements 15 are moved along the gripping direction 19 so as to arrange between the two boxes S.

The detachment elements 15 are then heated so as to cause the adhesive means to melt.

In addition, if the adhesive means are applied substantially continuously along the perimeter edge of the boxes S, the detachment elements 15 can be moved along the direction of detachment 18 so as to carry out the complete removal thereof.

Once the boxes S have been detached, the detachment elements 15, arranged inferiorly to one of the boxes S so as to support it, are raised along the direction of adjustment 16 so as to cause it to detach from the box S below. In addition, the heating of the detachment elements 15 is turned off so as to cause the cooling thereof.

At this point, the abutment means 10 are moved to the home position, so as to allow displacing the box S which is still resting on the holding plane 3a along the direction of forward movement 4.

Next, the detachment elements 15 are lowered so that the box S held by the latter is placed on the holding plane 3a, after which the detachment elements 15 are moved along the gripping direction 19 away from each other. In case the group of suction cups 14 is still gripping, it is turned off so as to release the box S.

At this point, this box S can also proceed towards the relevant user point along the direction of forward movement 4.

In the event of the detachment elements 15 being locked together with the abutment means 10 along the direction of adjustment 16 it is therefore necessary that they, after placing the box S on the holding plane 3a, raise again to allow the box itself to transit along the direction of forward movement 4.

It has in practice been ascertained that the described invention achieves the intended objects, and in particular, the fact is emphasized that the equipment covered by the present invention makes it possible to conveniently and easily separate boxes bound together to form a bundle.

Specifically, the separation means allow the straps wrapped around the group of boxes to be cut and the detachment elements to remove the adhesive means positioned between the boxes, thus achieving complete separation of each box and allowing them to be easily handled for the subsequent composition of orders.

## Claims

1. Equipment (1) for the separation of boxes of manufactured articles, wherein each of such boxes (S) comprises a plurality of manufactured articles and wherein the boxes (S) are integrally bound together to form a group (G) of boxes (S), wherein the boxes (S) of said group (G) are bound to each other by means of at least one strap (R) closed in a ring around them and wherein the boxes (S) of said group (G) superimposed onto each other are mutually bound by adhesive means, comprising:
- a basic frame (2);
- movement means (3) of at least one group (G) of said boxes of manufactured articles along at least one direction of forward movement (4) associated with said basic frame (2);
- separation means (7) for the mechanical separation of said boxes (S) from each other;
wherein said separation means (7) comprise at least cutting means (8) of said strap (R);
wherein said movement means (3) define a holding plane (3a) of the group (G) of boxes and by the fact that said cutting means (8) are arranged inferiorly to said holding plane (3a) and
**characterized by** the fact that said separation means (7) comprise at least one detachment element (15) insertable between the boxes (S) of said group (G) to separate them from each other, and
by the fact that said detachment element (15) is movable by shifting along a direction of detachment (18) substantially parallel to said direction of forward movement (4).

2. Equipment (1) according to claim 1, **characterized by** the fact that said cutting means (8) comprise at least one cutting element (8a) associated with said basic frame (2) and movable by shifting along a direction of cutting (9) substantially parallel to said direction of forward movement (4).

3. Equipment (1) according to one or more of the preceding claims, **characterized by** the fact that said movement means (3) comprise at least one pair of belts (3b) spaced apart from each other and movable along said direction of forward movement (4), by the fact that said basic frame (2) comprises at least one pair of guiding elements (5), each of which supporting a relevant belt (3b), spaced apart from each other to define a free volume (6) positioned between them, and by the fact that said cutting element (8a) is associated with at least one of said guiding elements (5) and is arranged inside said free volume (6).

4. Equipment (1) according to claim 2 or 3, **characterized by** the fact that said cutting element (8a) is movable between a position of work, wherein it is arranged at the point where said holding plane (3a) is located, to interfere with said strap (R), and a home position, wherein it is arranged lower than the position of work.

5. Equipment (1) according to one or more of the preceding claims, **characterized by** the fact that it comprises abutment means (10) of said group (G) of boxes associated with said basic frame (2) and arranged along said direction of forward movement (4).

6. Equipment (1) according to claim 5, **characterized by** the fact that said abutment means (10) are movable between a position of work, wherein they are adapted to interact with the group (G) of boxes which is movable along said direction of forward movement (4), and a home position, wherein they are moved with respect to the position of work so as to allow the passage of said boxes (S) along said direction of forward movement (4) as a result of their mutual separation.

7. Equipment (1) according to claim 5 or 6, **characterized by** the fact that it comprises sensor means (12) adapted to detect the interaction between said group (G) of boxes and said abutment means (10) and by the fact that it comprises at least one electronic control unit (13) operatively connected to said sensor means (12) and to said movement means (3), said electronic control unit (13) being configured to interrupt the operation of said movement means (3) as a result of the signal received by said sensor means (12).

8. Equipment (1) according to one or more of the preceding claims, **characterized by** the fact that said separation means (7) comprise gripping means (14) for gripping at least one of the boxes (S) of said group (G).

9. Equipment (1) according to claim 8, **characterized by** the fact that said gripping means (14) are arranged above said movement means (3) and are adapted to intercept the box (S) of said group (G) placed higher in order to raise it with respect to those below.

10. Equipment (1) according to one or more of the preceding claims, **characterized by** the fact that said detachment element (15) is movable along a direction of adjustment (16) transverse to said direction of detachment (18) so as to vary its height with respect to said group (G) of boxes.

11. Equipment (1) according to one or more of the preceding claims, **characterized by** the fact that it comprises detection means (17) of a gap between two boxes (S) superimposed onto each other of said group (G) and by the fact that it comprises an electronic control unit (13) operatively connected to said detection means (17) and to said at least one detachment element (15), said electronic control unit (13) being configured to move said detachment element (15) along said direction of adjustment (16) so as to position it at the point where said gap is located.

12. Equipment (1) according to one or more of the preceding claims, **characterized by** the fact that said detachment element (15) is of the heating type.

13. Equipment (1) according to one or more of the preceding claims, **characterized by** the fact that said detachment element (15) is movable along a gripping direction (19), close to/away from said group (G) of boxes, transverse to said direction of forward movement (4).

## Patentansprüche

1. Vorrichtung (1) zum Trennen von Kartons von gefertigten Artikeln, wobei jeder dieser Kartons (S) eine Vielzahl von gefertigten Artikeln enthält und wobei die Kartons (S) miteinander zu einer Einheit verbunden sind, um eine Gruppe (G) von Kartons (S) zu bilden, wobei die Kartons (S) der Gruppe (G) mittels mindestens eines um sie herum zu einem Ring geschlungenen Bandes (R) miteinander verbunden sind und wobei die übereinander angeordneten Kartons (S) der Gruppe (G) durch Klebemittel miteinander verbunden sind, umfassend:
- einen Grundrahmen (2);
- Mittel (3) zum Bewegen von mindestens einer Gruppe (G) von Kartons von gefertigten Artikeln entlang mindestens einer Vorwärtsbewegungsrichtung (4), die mit dem Grundrahmen (2) verbunden sind;
- Trennmittel (7) zum mechanischen Trennen der Kartons (S) voneinander;
wobei die Trennmittel (7) mindestens Mittel (8) zum Schneiden des Bandes (R) umfassen;
wobei die Bewegungsmittel (3) eine Halteebene (3a) für die Gruppe (G) von Kartons definieren und dadurch, dass die Schneidemittel (8) unterhalb der Halteebene (3a) angeordnet sind, und
**dadurch gekennzeichnet, dass** die Trennmittel (7) mindestens ein Trennelement (15) umfassen, das zwischen die Kartons (S) der Gruppe (G) einführbar ist, um diese voneinander zu trennen, und
dadurch, dass das Trennelement (15) durch Verschieben entlang einer Trennrichtung (18) bewegbar ist, die im Wesentlichen parallel zu der Vorwärtsbewegungsrichtung (4) verläuft.

2. Vorrichtung (1) nach Anspruch 1, **dadurch gekennzeichnet, dass** die Schneidemittel (8) mindestens ein Schneidelement (8a) umfassen, das mit dem Grundrahmen (2) verbunden ist und durch Verschieben entlang einer Schneidrichtung (9) bewegbar ist, die im Wesentlichen parallel zu der Vorwärtsbewegungsrichtung (4) verläuft.

3. Vorrichtung (1) nach einem oder mehreren der vorhergehenden Ansprüche, **dadurch gekennzeichnet, dass** die Bewegungsmittel (3) mindestens ein Paar Riemen (3b) umfasst, die zueinander beabstandet und entlang der Vorwärtsbewegungsrichtung (4) bewegbar sind, dadurch, dass der Grundrahmen (2) mindestens ein Paar Führungselemente (5) umfasst, von denen jedes einen entsprechenden Riemen (3b) trägt, die zueinander beabstandet sind, um einen zwischen ihnen angeordneten freien Raum (6) zu definieren, und dadurch, dass das Schneidelement (8a) mindestens einem der Führungselemente (5) zugeordnet und innerhalb des freien Raums (6) angeordnet ist.

4. Vorrichtung (1) nach Anspruch 2 oder 3, **dadurch gekennzeichnet, dass** das Schneidelement (8a) zwischen einer Arbeitsposition, in der es an der Stelle angeordnet ist, an der sich die Halteebene (3a) befindet, um in das Band (R) einzugreifen, und einer Ausgangsposition beweglich ist, in der es tiefer als die Arbeitsposition angeordnet ist.

5. Vorrichtung (1) nach einem oder mehreren der vorhergehenden Ansprüche, **dadurch gekennzeichnet, dass** sie Anschlagmittel (10) der Gruppe (G) von Kartons umfasst, die mit dem Grundrahmen (2) verbunden und entlang der Vorwärtsbewegungsrichtung (4) angeordnet sind.

6. Vorrichtung (1) nach Anspruch 5, **dadurch gekennzeichnet, dass** die Anschlagmittel (10) zwischen einer Arbeitsposition, in der sie mit der Gruppe (G) von Kartons, die entlang der Vorwärtsbewegungsrichtung (4) bewegbar ist, zusammenwirken können, und einer Ausgangsposition beweglich sind, in der sie in Bezug auf die Arbeitsposition bewegt sind, um den Durchgang der Kartons (S) entlang der Vorwärtsbewegungsrichtung (4) infolge ihrer gegenseitigen Trennung zu ermöglichen.

7. Vorrichtung (1) nach Anspruch 5 oder 6, **dadurch gekennzeichnet, dass** sie Sensormittel (12) umfasst, die ausgebildet sind, die Wechselwirkung zwischen der Gruppe (G) von Kartons und den Anschlagmitteln (10) zu erfassen, und dadurch, dass sie mindestens eine elektronische Steuereinheit (13) umfasst, die mit den Sensormitteln (12) und den Bewegungsmitteln (3) funktional verbunden ist, wobei die elektronische Steuereinheit (13) ausgebildet ist, den Betrieb der Bewegungsmittel (3) aufgrund des von den Sensormitteln (12) empfangenen Signals zu unterbrechen.

8. Vorrichtung (1) nach einem oder mehreren der vorhergehenden Ansprüche, **dadurch gekennzeichnet, dass** die Trennmittel (7) Greifmittel (14) zum Greifen von mindestens einem der Kartons (S) der Gruppe (G) umfassen.

9. Vorrichtung (1) nach Anspruch 8, **dadurch gekennzeichnet, dass** die Greifmittel (14) oberhalb der Bewegungsmittel (3) angeordnet und ausgebildet sind, die höher angeordneten Kartons (S) der Gruppe (G) abzufangen, um sie gegenüber den darunter liegenden anzuheben.

10. Vorrichtung (1) nach einem oder mehreren der vorhergehenden Ansprüche, **dadurch gekennzeichnet, dass** das Trennelement (15) entlang einer Einstellrichtung (16) quer zu der Trennrichtung (18) beweglich ist, um seine Höhe in Bezug auf die Gruppe (G) von Kartons zu variieren.

11. Vorrichtung (1) nach einem oder mehreren der vorhergehenden Ansprüche, **dadurch gekennzeichnet, dass** sie Mittel (17) zum Erfassen eines Spaltes zwischen zwei übereinander angeordneten Kartons (S) der Gruppe (G) umfasst und dadurch, dass sie eine elektronische Steuereinheit (13) umfasst, die mit den Erfassungsmitteln (17) und mit dem mindestens einen Trennelement (15) funktional verbunden ist, wobei die elektronische Steuereinheit (13) ausgebildet ist, das Trennelement (15) entlang der Einstellrichtung (16) zu bewegen, um es an der Stelle zu positionieren, an der sich der Spalt befindet.

12. Vorrichtung (1) nach einem oder mehreren der vorhergehenden Ansprüche, **dadurch gekennzeichnet, dass** das Trennelement (15) von der heizenden Art ist.

13. Vorrichtung (1) nach einem oder mehreren der vorhergehenden Ansprüche, **dadurch gekennzeichnet, dass** das Trennelement (15) entlang einer Greifrichtung (19) bewegbar ist, nahe an/ weg von der Gruppe (G) von Kartons, quer zu der Vorwärtsbewegungsrichtung (4).

## Revendications

1. - Équipement (1) pour la séparation de boîtes d'articles manufacturés, dans lequel chacune de telles boîtes (S) comprend une pluralité d'articles manufacturés et dans lequel les boîtes (S) sont intégralement liées ensemble pour former un groupe (G) de boîtes (S), dans lequel les boîtes (S) dudit groupe (G) sont liées entre elles au moyen d'au moins une sangle (R) fermée en un anneau autour d'elles, et dans lequel les boîtes (S) dudit groupe (G) superposées les unes sur les autres sont mutuellement liées par des moyens adhésifs, comprenant :
- un cadre de base (2) ;
- des moyens de déplacement (3) d'au moins un groupe (G) desdites boîtes d'articles manufacturés le long d'au moins une direction de mouvement vers l'avant (4) associés audit cadre de base (2) ;
- des moyens de séparation (7) pour la séparation mécanique desdites boîtes (S) les unes des autres ;
dans lequel lesdits moyens de séparation (7) comprennent au moins des moyens de coupe (8) de ladite sangle (R) ;
dans lequel lesdits moyens de déplacement (3) définissent un plan de maintien (3a) du groupe (G) de boîtes, et lesdits moyens de coupe (8) sont disposés sous ledit plan de maintien (3a), et
**caractérisé par le fait que** lesdits moyens de séparation (7) comprennent au moins un élément de séparation (15) apte à être inséré entre les boîtes (S) dudit groupe (G) pour les séparer les unes des autres, et
**par le fait que** ledit élément de séparation (15) est mobile par décalage le long d'une direction de séparation (18) sensiblement parallèle à ladite direction de mouvement vers l'avant (4).

2. - Equipement (1) selon la revendication 1, **caractérisé par le fait que** lesdits moyens de coupe (8) comprennent au moins un élément de coupe (8a) associé audit cadre de base (2) et mobile par décalage le long d'une direction de coupe (9) sensiblement parallèle à ladite direction de mouvement vers l'avant (4).

3. - Equipement (1) selon l'une ou plusieurs des revendications précédentes, **caractérisé par le fait que** lesdits moyens de déplacement (3) comprennent au moins une paire de courroies (3b) espacées l'une de l'autre et mobiles le long de ladite direction de mouvement vers l'avant (4), **par le fait que** ledit cadre de base (2) comprend au moins une paire d'éléments de guidage (5), chacun d'eux portant une courroie correspondante (3b), espacés l'un de l'autre pour définir un volume libre (6) positionné entre eux, et **par le fait que** ledit élément de coupe (8a) est associé à au moins l'un desdits éléments de guidage (5) et est disposé à l'intérieur dudit volume libre (6).

4. - Equipement (1) selon la revendication 2 ou 3, **caractérisé par le fait que** ledit élément de coupe (8a) est mobile entre une position de travail, dans laquelle il est disposé à l'endroit où se trouve ledit plan de maintien (3a), pour interférer avec ladite sangle (R), et une position de repos, dans laquelle il est disposé plus bas que la position de travail.

5. - Equipement (1) selon l'une ou plusieurs des revendications précédentes, **caractérisé par le fait qu'**il comprend des moyens de butée (10) dudit groupe (G) de boîtes associés audit cadre de base (2) et disposés le long de ladite direction de mouvement vers l'avant (4).

6. - Equipement (1) selon la revendication 5, **caractérisé par le fait que** lesdits moyens de butée (10) sont mobiles entre une position de travail, dans laquelle ils sont aptes à interagir avec le groupe (G) de boîtes qui est mobile le long de ladite direction de mouvement vers l'avant (4), et une position de repos, dans laquelle ils sont déplacés par rapport à la position de travail de manière à permettre le passage desdites boîtes (S) le long de ladite direction de mouvement vers l'avant (4) comme suite à leur séparation mutuelle.

7. - Equipement (1) selon la revendication 5 ou 6, **caractérisé par le fait qu'**il comprend des moyens de capteur (12) aptes à détecter l'interaction entre ledit groupe (G) de boîtes et lesdits moyens de butée (10) et **par le fait qu'**il comprend au moins une unité de commande électronique (13) reliée fonctionnellement auxdits moyens de capteur (12) et auxdits moyens de déplacement (3), ladite unité de commande électronique (13) étant configurée pour interrompre le fonctionnement desdits moyens de déplacement (3) comme suite au signal reçu par lesdits moyens de capteur (12).

8. - Equipement (1) selon l'une ou plusieurs des revendications précédentes, **caractérisé par le fait que** lesdits moyens de séparation (7) comprennent des moyens de préhension (14) pour saisir au moins l'une des boîtes (S) dudit groupe (G).

9. - Equipement (1) selon la revendication 8, **caractérisé par le fait que** lesdits moyens de préhension (14) sont disposés au-dessus desdits moyens de déplacement (3) et sont aptes à intercepter la boîte (S) dudit groupe (G) placée plus haut pour la soulever par rapport à celles situées au-dessous.

10. - Equipement (1) selon l'une ou plusieurs des revendications précédentes, **caractérisé par le fait que** ledit élément de séparation (15) est mobile le long d'une direction d'ajustement (16) transversale à ladite direction de séparation (18) afin de faire varier sa hauteur par rapport audit groupe (G) de boîtes.

11. - Equipement (1) selon l'une ou plusieurs des revendications précédentes, **caractérisé par le fait qu'**il comprend des moyens de détection (17) d'un espacement entre deux boîtes (S) superposées l'une sur l'autre dudit groupe (G) et **par le fait qu'**il comprend une unité de commande électronique (13) reliée fonctionnellement auxdits moyens de détection (17) et audit au moins un élément de séparation (15), ladite unité de commande électronique (13) étant configurée pour déplacer ledit élément de séparation (15) le long de ladite direction d'ajustement (16) de manière à le positionner à l'endroit où se trouve ledit espacement

12. - Equipement (1) selon l'une ou plusieurs des revendications précédentes, **caractérisé par le fait que** ledit élément de séparation (15) est du type chauffant.

13. - Equipement (1) selon l'une ou plusieurs des revendications précédentes, **caractérisé par le fait que** ledit élément de séparation (15) est mobile le long d'une direction de préhension (19), proche/éloignée dudit groupe (G) de boîtes, transversalement à ladite direction de mouvement vers l'avant (4).
